Europäisches Patentamt

European Patent Office

Office européen des brevets

(11) Publication number: **0019640**
**A1**

# EUROPEAN PATENT APPLICATION

(21) Application number: **79101187.7**

(22) Date of filing: **19.04.79**

(51) Int. Cl.³: **C 10 G 33/02, B 01 D 17/06**

(43) Date of publication of application: **10.12.80**
**Bulletin 80/25**

(84) Designated Contracting States: **BE DE FR GB IT NL**

(71) Applicant: **Petrolite Corporation, 5455 Old Spanish Trail, Houston Texas 77001 (US)**

(72) Inventor: **Martin, Robert Bruce, 6407 Hickorycrest, Spring Texas 77001 (US)**

(74) Representative: **Wasmeier, Alfons, Dipl.-Ing. et al, Postfach 382 Greflingerstrasse 7, D-8400 Regensburg (DE)**

(54) **Plural stage desalter/dehydrator in a single vessel and petroleum oil desalting process.**

(57) A desalter/dehydrator for the desalting of petroleum oils, having a plurality of electrified coalescing stages between a plurality of horizontally disposed planar permeable electrodes (3), (4), (5) in a single vessel (1), and wherein the stages are isolated hydraulically to allow serial stage operation. The several stages are each separately energized. The product from each stage is collected (14), (22) and introduced to the following stage by distribution means (6), (21), after addition of fresh water (18). The separated water passes downwardly through said electrodes to the lower portion of said vessel.

# PLURAL STAGE DESALTER/DEHYDRATOR IN A SINGLE VESSEL

## BACKGROUND OF THE INVENTION

This invention relates to apparatus and process useful for desalting and/or dehydrating oil-continuous emulsions such as crude petroleum oils, although they can be used in the resolution of other emulsions, which term is herein used as including dispersions. More particularly, the invention relates to such apparatus and process employing multiple electrode/distributor systems located in a single vessel.

It is conventional to desalt or dehydrate oil-continuous emulsions by introducing such emulsions directly into an electric treating field of sufficient intensity to coalesce the suspended droplets of the dispersed phase into masses of sufficient size to gravitate from the oil. The dispersed phase of such emulsions is composed of a material, usually aqueous, that is sufficiently immiscible with the oil to produce an internal or dispersed phase. Initially, the dispersed droplets are of such small size or are so stabilized that they will not readily gravitate from the oil phase. However, the electric field coalesces such dispersed droplets, and it is found that the resulting coalesced masses gravitate rapidly from the oil, usually in the same container as that in which electric treatment takes place. In a desalting operation, a quantity of water may be mixed with the incoming crude oil in a valve or other mixer, all as well known, so that a more complete removal of salt from the oil may be accomplished. Typical of such prior art dehydrator/desalters is that described in US patent No. 2,880,158 to Delber W. Turner and a version for use on shipboard described in US patent No. 3,736,245 to Frederick D. Watson and Howell R. Jarvis. Other related prior art US patents are the following:

2,033,446   2,527,690   2,848,412   3,250,695   3,592,756
2,072,888   2,543,996   2,892,768   3,531,393
2,443,646   2,557,847   2,894,895   3,577,336

and German patent No. 1,014,076 (Helmut Stock; August 22, 1957).

It is an object of this invention to provide a dehydrating/desalting apparatus, especially useful for desalting crude oil, that employs multiple electrode/distributor systems located in a single vessel to achieve serial stage desalting.

It is a further object of this invention to provide a process for desalting crude oil in a plurality of serial stages.

Further objects of the invention will be evident to those skilled in the art in the course of the following description.

## SUMMARY OF THE INVENTION

In accordance with this invention, there is provided an electric treater for resolving oil-continuous emulsions and other emulsions and for desalting of liquids such as crude oil, such treater comprising a closed vessel provided with a plurality of coalescing stages with no impermeable barriers between them. The stages are isolated hydraulically, i.e., are hydraulically independent, to allow serial stage operation, each stage being provided with permeable, planar electrode means which provide an electric field to cause coalescing of the dispersed phase, ordinarily water or brine, the electric fields being superimposed.

The system is composed of multiple electrode assemblies
each with individual distributor systems with the hydraulics controlled to isolate the individual stages to allow
multiple stage operation. The use of two or three stages
is preferred, although a greater number may be employed.

Collector pumps are arranged between successive coalescing
stages and conduits provided so that the treated liquid
from one stage is returned as the feed for the succeeding
stage. The electrodes are preferably horizontally disposed
planar electrodes in vertically spaced relationship. The
treatment vessel may be in the form of a sphere, a horizontally elongated cylinder substantially longer in length
than in width, or of other suitable form.

More particularly the apparatus according to this invention
is characterised by a plurality of horizontally disposed
planar permeable electrodes in vertically spaced relationship, first stage distributor means and conduit means for
supplying an oil-water emulsion to said first stage distributor means, said first stage distributor means being
adapted to cause said emulsion to flow in a first stage
treatment between the bottom electrode and the electrode
next above said bottom electrode, means for collecting the
so-treated first stage product, second stage distributor
means and conduit means for supplying a second stage oil-
water emulsion to said second stage distributor means, said
second stage distributor means being adapted to cause said
second stage emulsion to flow in a second stage treatment
between the electrode next above the bottom electrode and
the electrode next above said electrode next above the bottom
electrode, means for collecting the so-treated second stage product, product withdrawal and outlet means in the upper portion of said vessel, said permeable electrodes and the vessel interior being adapted and arranged to permit water to pass downwardly through said electrodes to the lower portion of said vessel, water withdrawal means in the lower portion of said vessel, mixing means for each stage and conduit means for supplying oil feed and water to each of said mixing means, said mixing means being adapted to supply oil-water emulsion to said conduit means for supplying oil-water emulsion to each of said distributor means, pumping means and conduit means for withdrawing products from the collecting means of each stage other than the last and passing it to the mixing means for the succeeding stage, and means for supplying water to each of said mixing means.

The vessel can be horizontally elongated, it can be in the form of a horizontal cylinder substantially longer in horizontal length than width, or alternatively, it can be spherical or the like.

According to one embodiment of this invention a top, a middle and a bottom electrode is provided. There can be the top, middle and bottom electrodes all energized, there can be the top and bottom electrodes energized and the middle electrode at ground potential or there can be the top and middle electrodes energized and the bottom electrode at ground potential.

The desalting apparatus according to this invention comprises also means for controlling the level of the water in the lower portion of said vessel at a predetermined position.

Furthermore, a process of desalting a petroleum oil is characterized by the steps of emulsifying said oil with water to form a first stage emulsion, passing said emulsion between horizontally disposed electrodes contained in a trating vessel, whereby said emulsion is subjected to an electric field and the emulsion is broken, allowing de-emulsified water to fall towards the bottom of the vessel, collecting the so-treated first stage product, maintaining a pool of water in the lower portion of said vessel, emulsifying the first stage product with fresh water to form a second stage emulsion, passing said second stage emulsion between horizontally disposed electrodes in a path substantially parallel to but above that followed by the first stage emulsion and hydraulically substantially isolated therefrom but with no impermeable barriers between the stages, whereby the second stage emulsion is broken, allowing de-emulsified water to fall towards the bottom of the vessel into said pool of water, and withdrawing desalted product from the upper portion of said vessel and water from the lower portion of said vessel.

According to an embodiment of this process the top and bottom electrodes are energized and the middle electrode is at ground potential, or alternatively the top and middle electrodes are energized and the bottom electrode is at ground potential, or alternatively the top, middle and bottom electrodes are all energized.

Moreover, the level of water in the lower portion of said vessel is maintained at a predetermined position.

The process according to this invention also includes repeating in at least one additional stage the steps of emulsifying the treated product of the previous stage with fresh water, breaking the resulting emulsion by passing it between horizontally disposed electrodes in a path substantially parallel to but above that followed by the previous stage emulsion, allowing the de-emulsified water to fall towards the bottom of the vessel into said pool of water, and collecting the so-treated product.

There are three stages in this process, which stages are defined by four electrodes, and the electrode next below the top electrode is at ground potential and the other electrodes are energized.

## DETAILED DESCRIPTION OF THE INVENTION

The invention is illustrated by but not limited to the following exemplary embodiments.

Referring to the deawings:

Fig. 1 is a transverse vertical cross section of one embodiment of an electrical trater of the present invention intended for serial stage operation.

Fig. 2 is a longitudinal vertical cross section taken along line 2-2 of the electrical treater shown in Fig. 1.

Fig 3 is a transverse vertical cross section of another electrical treater of this invention intended for serial stage operation.

Fig. 4 is a vertical cross section of yet another electrical treater of this invention intended for serial stage operation.

Fig. 5 is a schematic illustration of a vertical cross section of a three stage series electrical treater of this invention.

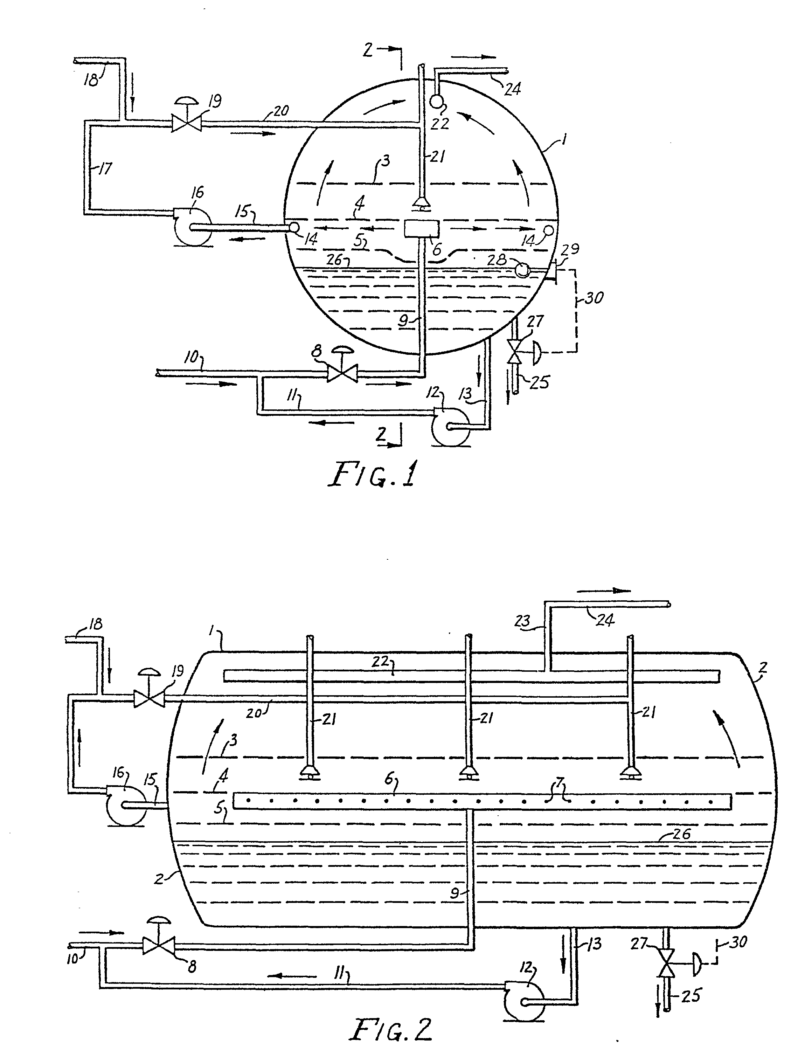

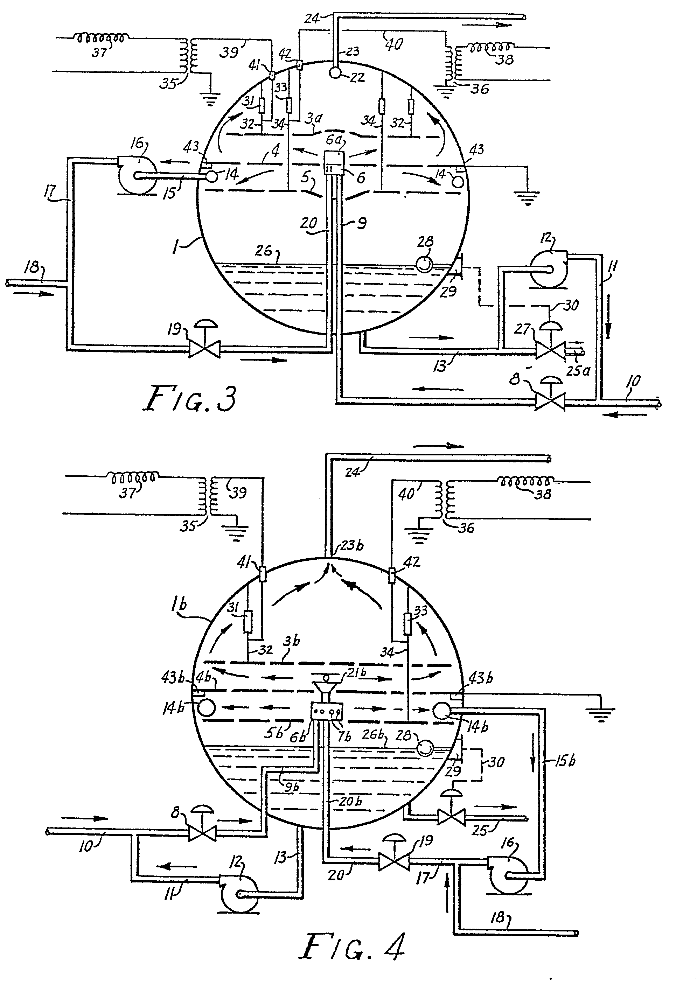

Figs. 1 and 2 illustrate one embodiment of the invention, expecially useful when it is desired to convert an existing Petreco high velocity desalter to two stage series operation. The desalter consists of a horizontally disposed generally cylindrical vessel 1 having rounded ends 2, which may suitably have a diameter of about 2,40 m to 4,20 m. Lengths of about 7,50 m and 14,7 m and as much as 4,00 m have proved suitable with a 3,60 m diameter vessel. Inside the vessel 1 are three horizontally disposed planar electrodes 3, 4 and 5. Upper electrode 3 and bottom electrode 5 extend almost the entire length and width of the vessel 1, electrode 5 being downwardly curved in the vicinity of its longitudinal axis to accommodate distributor 6. These electrodes are energized. Middle electrode 4, which is at ground potential, is in contact with the wall of vessel 1. The electrodes 3, 4 and 5 are spaced about 15 to 37,5 cm apart, 25 cm being very suitable. Each electrode may be permeable, e.g., be a grid of metal rods or pipes, suitably of cold finished steel, of a structure similar to that shown in Patent No. 2.880.158.

A distributor 6, serving as the first stage distributor, and shown here as a box-like conduit or header, extends horizontally for most of the length of vessel 1 just under middle electrode 4, to which it may be attached, and along its longitudinal axis. Bottom electrode 5 may be downwardly curved as shown in the vicinity of its longitudinal axis to accommodate distributor 6. Orifices 7 are provided in the sides of the conduit all along its length. However, instead of a box-like conduit, a pipe with holes drilled in it may be substituted. Distributor 6 is supplied by mixing valve 8 via conduit or riser pipe 9. Mixing valve 8 is supplied by oil conduit 10 and water conduit 11, which may be connected with pump 12 and recycle conduit 13, as shown, and/or a fresh water source not shown. Interstage outlet collectors 14, which may be drilled pipes supported at the vessel wall with angle clips (not shown) extend longitudinally along the sides of tank 1, and are connected to conduit 15 which leads to oil recycle pump 16 and thence to conduit 17. Conduit 18, connected to a fresh water source, leads into conduit 17, which leads to mixing valve 19. A conduit 20 extends from mixing valve 19 to distributor modules 21, which may be similar in structure to that shown in Turner Patent No. 2.543.996 or Turner Patent No. 2.527.690. Although three such modules are shown here, a lesser or greater number may be employed. For example, in a 14,7 m long vessel, four such modules may be used. An outlet collector 22, which may be a pipe with holes drilled in the upper wall, extends horizontally along the top of tank 1 and leads to outlet 23 and conduit 24. A water effluent conduit 25 is connected to the lower part of vessel 1.

In operation, the temperature of the crude oil depends upon the crude specific gravity and the type of crude. However, in many cases of crude oil, temperatures of between about $38^{\circ}$ C and $175^{\circ}$ C* being optimum, are used. The pressure must be sufficient to keep the oil and water mixture liquid at the operating temperature. The crude oil is charged by conduit 10 and water is added via conduit 11, which is supplied by recycle conduit 13. The oil may be brought to the desired temperature by any suitable procedure, such as by heat exchange with another refinery stream. The amount of water added is suitably about 10% of the crude oil charged. The two fluids are mixed in mixing valve 8 to form an emulsion. The emulsion is carried through riser pipe 9 to the first stage distributor 6, from whence it flows between middle electrode 4 and bottom electrode 5 in either direction in a generally horizontal transverse direction toward the sides of the vessel 1 where the interstage collectors 14 are located. Water which has been thrown out of emulsion by the electric field between

* with about $120^{\circ}$ C

electrodes 4 and 5 falls toward the bottom of vessel 1, where a pool of collected water is maintained. The main portion of the treated oil is taken up by collectors 14 and is pumped by interstage pump 16 to conduit 17. A 5% addition of fresh water takes place in this conduit and is emulsified into the oil by mixing valve 19. The second stage emulsion thus formed is carried by conduit 20 to second stage distributors 21 from whence it flows between electrodes 3 and 4 in either direction, more or less transversely, to the sides of the vessel 1. The treated oil passes upwardly near the edge of electrode 3 and along the sides of the vessel 1 and leaves the vessel by means of outlet collector 22, outlet 23 and conduit 24. The arrows shown in the figures indicate the path of the fluids through the conduits and, in a general way, inside the vessel 1.

The level of the interface 26 of the water with the treated oil may be maintained automatically at the desired position in the lower portion of vessel 1. As shown in the drawings, this is accomplished by means of motor valve 27 on effluent conduit 25, which valve is actuated between open and closed positions by a float 28 connected to a control unit 29, which delivers an actuating signal through an interconnection, indicated by dashed line 30, to valve 27. The float 28 senses the water level interface 26, and the valve 27 is controlled to maintain the interface 26 at the desired level in the lower portion of vessel 1. Other liquid level control means for maintaining the interface 26 at the desired level, such as an electrical capacitance probe, may be employed.

While the above described embodiment is of special interest in the conversion of existing desalting units having distributors 21 already present, desalters are also contemplated and within the scope of this invention wherein both the first and second stage distributors may take the form of the boxlike conduit 6 or drilled pipe. Similarly, both first and second stage distributors may take the form of distributors 21. Moreover, either or both stage distributors may be supported by and supplied either from the top or bottom of vessel 1, or otherwise.

In the embodiment described above, the top and bottom electrodes 3 and 5 are each energized with its own transformers, here not shown, and the middle electrode 4 is at ground potential. However, it is also contemplated and within the scope of this invention that the top and middle electrode be charged individually and the bottom electrode grounded. A potential difference of about 15,000 to 33,000 volts may suitably be maintained between electrodes 3 and 4 and between electrodes 4 and 5. The energized electrodes may be opposed electrodes if single phase current is employed or two legs of a three phase current (3 phase open Δ) where the grounded electrode is the middle one. Moreover, if a three phase system is used, all three electrodes may be energized. The supports and circuitry for the electrodes are omitted in Figs. 1 and 2 but may be the same as that shown in Fig. 3, described below.

Fig. 3 is a representation of a vertical cross-section of an embodiment of the invention using a horizontal cylindrical vessel 1 with boxlike conduits 6 and 6a as distributors in both stages and otherwise similar in its main features and operation to that shown in Figs. 1 and 2. The reference numerals in this figure correspond to those employed in Figs. 1 and 2 for the same or similar features.

In this embodiment distributors 6 and 6a are both fed from below by riser pipes 9 and 20, respectively. The water leaves vessel 1 by means of a single conduit 13 which supplies recycle water to conduit 11 and effluent to conduit 25a. Motor valve 27 on conduit 25a is actuated by a signal from control unit 29. Upper electrode 3a in this embodiment is upwardly curved in the vicinity of its longitudinal axis to accommodate distributor 6a, being symmetrical in this respect to bottom electrode 5.

Electrode 3a is suspended by one or more vertical insulators 31 and rods 32, as required to support the weight of the electrode. Similarly electrode 5 is suspended by one or more vertical insulators 33 and rods 34. Electrodes 3 and 5 are energized by transformers 35 and 36, respectively. The middle electrode 4 is at ground potential. It is suitably fastened to the vessel 1, for example, by means of attached rail bars 43, vessel 1 being grounded. As shown here, transformers 35 and 36 are step up transformers having reactors 37 and 38 in series with the respective primaries. The secondaries have one end grounded and energize conductors 39 and 40, respectively, which connect through entrance bushings 41 and 42, respectively, to electrodes 3a and 5.

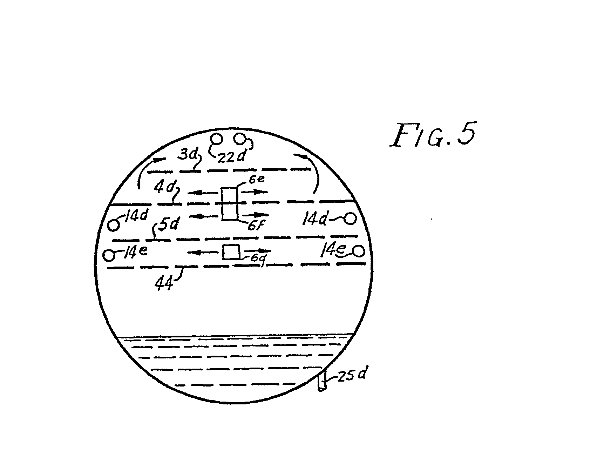

Fig. 4 is a representation of a vertical cross section of a spherical desalter such as the Petreco spherical desalter which has been converted to two stage series operation. The reference numerals in this figure also correspond to those employed in Figs. 1 and 2 for the same or similar features. Vessel 1b is a spherical container which may have a diameter of up to 42 feet, suitably 18 feet. In this embodiment, both first and second stage distributors 6b and 21b are brough in and supplied from the bottom of the vessel. The first stage distributor 6b is, as shown here, a circular box supplied by conduit 9b and built around riser pipe 20b and having orifices 7b around its periphery to control flow distribution. Electrodes 3b, 4b and 5b are circular, as required to fit the cross section of the spherical vessel 1b, electrode 4b being suitably fastened to the vessel 1b, for example, by means of attached rail bars 43b, vessel 1b being grounded. Collectors 14b, which may be drilled pipes arcuately shaped to conform to the sides of vessel 1b, and supported at the vessel wall with angle clips (not shown), are positioned to take up the main portion of the oil treated in the first stage. The treated oil is carried by conduit 15b to recycle pump 16. The operation of this desalter is otherwise similar to the embodiments described above.

In each of the above described embodiments, the exit velocity from the drilled pipe distributor or the orifices of the distributor 6 or 6b is such that there is enough inertial energy to carry the emulsion in a horizontal plane between the treating electrodes 4 and 5 or 4b and 5b to the interstage collectors 14 or 14b. These collectors are located to collect the first stage treated oil and some "override" of fluid from the second stage of treatment. The interstage pumping rate is controlled so that it exceeds the rate at which the treated oil is withdrawn from the unit by the second stage outlet collector. This may be accomplished by operating the recycle pump 16 at a pumping rate 10 to 20% faster than the initial charging rate.

Fig. 5 is a schematic representation of a vertical cross section of a desalter employing three desalting stages in series. The reference numerals correspond to those employed in Figs. 1 and 2 for the same or similar features. In this embodiment, a fourth planar, horizontally disposed electrode 44 is employed in addition to the three electrodes 3d, 4d and 5d, similar to those shown in the previously described embodiments. Electrode 44 is positioned below electrode 5d. Electrodes 3d, 5d and 44 are energized and electrode 4d is at ground potential. An additional distributor 6g, positioned between electrodes 5d and 44, is employed in addition to distributors 6e and 6f and a second interstage collector 14e is employed in addition to first interstage collector 14e. The distributors are all shown as boxlike conduits. In this embodiment, distributor 6g serves as the first stage distributor; distributor 6f as a second stage distributor; and distributor 6e serves as a third stage distributor. Fresh water for desalting is supplied to each desalting stage, although recycle water may be employed in the first stage. The treated product leaves the vessel 1 through outlet collectors 22d and water is removed through outlet 25d. The various conduits, valves and pumps removing and supplying fluids to and from the various stages and the electrical circuitry are not shown, but their nature will be evident from the descriptions of the embodiments shown in Figs. 1 to 4.

In an analogous manner to that of Fig. 5, desalters with more than three stages may be constructed.

The various distributors, collectors and electrodes described above may be supported in part by conventional means well known in the art, such as guy wires, in addition to being supported by the conduits and other support means disclosed.

It will be apparent from the foregoing discription that the invention is not limited to a particular shape of vessel, electrical circuitry, voltage employed, type of distributors, water level control means, arrangement of conduits, etc. Many embodiments, modifications, developments, and variations of forms are contemplated as long as they fall within the broad scope of the appended claims.

Patent Claims:

1. An apparatus for desalting an oil-continuous emulsion, said apparatus comprising a closed vessel which is provided therein with a plurality of coalescing stages, said stages being hydraulically independent to allow serial stage operation, characterised by

a plurality of horizontally disposed planar permeable electrodes (3, 4, 5; 3a, 3b; 4b, 5b; 3d, 4d, 5d) in vertically spaced relationship;

first stage distributor means (6, 6a, 6b, 6e, 6f, 6g) and conduit means (6, 7; 9) for supplying an oil-water emulsion to said first stage distributor means (6), said first stage distributor means being adapted to cause said emulsion to flow in a first stage treatment between the bottom electrode (5) and the electrode (4) next above said bottom electrode;

means (14) for collecting the so-treated first stage product, second stage distributor means (21) and conduit means (20) for supplying a second stage oil-water emulsion to said second stage distributor means, said second stage distributor means (21) being adapted to cause said second stage emulsion to flow in a second stage treatment between the electrode (4) next above the bottom electrode (5) and the electrode (3) next above said electrode (4) next above the bottom electrode (5);

means (22) for collecting the so-treated second stage product, product withdrawal and outlet means (23, 24) in the upper portion of said vessel (1);

said permeable electrodes (3, 4, 5) and the vessel interior being adapted and arranged to permit water to pass downwardly through said electrodes to the lower portion of said vessel;

water withdrawal means (27, 28, 29) in the lower portion of said vessel (1);

mixing means (8; 19) for each stage and conduit means (10, 11; 18, 20) for supplying oil feed and water to each of said mixing means, said mixing means being adapted to supply oil-water emulsion to said conduit means for supplying oil-water emulsion to each of said distributor means; pumping means (16) and conduit means (17) for withdrawing products from the collecting means (12) of each stage other than the last and passing it to the mixing means (19) for the succeeding stage, and means (10, 18) for supplying water to each of said mixing means (8, 19).

2. The apparatus of claim 1, characterised in that said vessel (1) is horizontally elongated.

3. The apparatus of claim 2, characterised in that said vessel (1) is in the form of a horizontal cylinder substantially longer in horizontal length than width.

4. The apparatus of claim 1, characterised in that said vessel (1) is spherical.

5. The apparatus of claim 1, characterised in that there are at least two stages.

6. The apparatus of claim 5, characterised in that at least two (3, 5 or 3, 4) of said electrodes are energized and that one electrode (4 or 5) is at ground potential or alternatively is energized, too.

7. The desalting apparatus of claim 1, comprising also means (27) for controlling the level of the water in the lower portion of said vessel (1) at a predetermined position.

8. A process for desalting a petroleum oil, characterised by the steps of emulsifying said oil with water to form a first stage emulsion; passing said emulsion between horizontally disposed electrodes contained in a treating vessel, whereby said emulsion is subjected to an electric field and the emulsion is broken, allowing de-emulsified water to fall towards the bottom of the vessel;

collecting the so-treated first stage product; maintaining a pool of water in the lower portion of said vessel; emulsifying the first stage product with fresh water to form a second stage emulsion;

passing said second stage emulsion between horizontally disposed electrodes in a path substantially parallel to but above that followed by the first stage emulsion and hydraulically substantially isolated therefrom but with no impermeable barriers between the stages, wherby the second stage emulsion is broken, allowing de-emulsified water to fall towards the bottom of the vessel into said pool of water, and withdrawing desalted product from the upper portion of said vessel and water from the lower portion of said vessel.

9. The process of claim 8, characterised in that said electric fields are superimposed, the upper electrode of said first stage serving as the lower electrode of said second stage.

10. The process of claim 8, characterised in that the level of water in the lower portion of said vessel is maintained at a predetermined position.

11. The process of claim 8, characterised in that at least two electrodes are energized and the remaining electrode is at ground potential or alternatively is energized, too.

12. The process of claim 8, characterised in that repeating in at least one additional stage the steps of emulsifying the treated product of the previous stage with fresh water, breaking the resulting emulsion by passing it between horizontally disposed electrodes in a path substantially parallel to but above that followed by the previous stage emulsion, allowing the de-emulsified water to fall towards the bottom of the vessel into said pool of water, and collecting the so-treated product.

13. The process of claim 12, characterised in that there are three stages, defined by four electrodes, and the electrode next below the top electrode is at ground potential and the other electrodes are energized.

FIG.1

FIG.2

0019640

FIG.3

FIG.4

*FIG.5*

## DOCUMENTS CONSIDERED TO BE RELEVANT

| Category | Citation of document with indication, where appropriate, of relevant passages | Relevant to claim |
|---|---|---|
| X | <u>US - A - 4 149 958</u> (MARTIN) <br> * Figures 1-4,6; claims 1-16; column 3, line 28 - column 4, line 36 * <br><br> ---- | 1-13 |

**CLASSIFICATION OF THE APPLICATION (Int. Cl. 3)**

C 10 G 33/02
B 01 D 17/06

**TECHNICAL FIELDS SEARCHED (Int.Cl. 3)**

C 10 G 33/02

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 14-12-1979 | MICHIELS |

EPO Form 1503.1 06.78